# EUROPÄISCHE PATENTSCHRIFT

(11) **EP 1 927 256 B1**
(45) Veröffentlichungstag und Bekanntmachung des Hinweises auf die Patenterteilung: **10.02.2010**
(21) Anmeldenummer: 06792974.5
(22) Anmeldetag: 23.08.2006
(51) Int. Cl.: H04W 60/00

(54) **FUNKKOMMUNIKATION IN EINEM MULTI-FUNKVERBINDUNGS-KOMMUNIKATIONSSYSTEM**
RADIO COMMUNICATION IN A MULTI-RADIO LINK COMMUNICATIONS SYSTEM
RADIOCOMMUNICATION DANS UN SYSTEME DE COMMUNICATION A LIAISONS RADIO MULTIPLES

(30) Priorität: 07.09.2005 DE 102005042536
(43) Veröffentlichungstag der Anmeldung: 04.06.2008
(73) Patentinhaber: Nokia Siemens Networks GmbH & Co. KG, 81541 München (DE)
(72) Erfinder: LEDERER, Horst, 85614 Kirchseeon (DE); LUO, Jijun, 81549 München (DE)
(86) Internationale Anmeldenummer: PCT/EP2006/065598
(87) Internationale Veröffentlichungsnummer: WO 2007/028717

(56) Entgegenhaltungen:
- WO-A-2005/055524
- US-A1- 2003 100 308
- LUO J. ET AL., SIEMENS AG: "Investigation of Resource Scheduling in WLANs Coupled with 3G Cellular Network" IEEE COMMUNICATIONS MAGAZINE, Juni 2003 (2003-06), Seiten 108-115, XP002409485 in der Anmeldung erwähnt
- SNOEREN A. C:: "Adaptive Inverse Multiplexing for Wide-Area Wireless Networks" IEEE, GOBAL TELECOMMUNICATIONS CONFERENCE, GLOBECOM 99, 1999, XP002409486 in der Anmeldung erwähnt

## Beschreibung

Die Erfindung bezieht sich auf ein Verfahren zum Betreiben einer Funk-Kommunikation in einem Multi-Funkverbindungs-Kommunikationssystem mit den oberbegrifflichen Merkmalen des Patentanspruchs 1, auf eine Koordinierungseinrichtung eines Multi-Funkverbindungs-Kommunikationssystems zum Ausführen eines solchen Verfahrens bzw. auf eine Teilnehmerstation zum Ausführen eines solchen Verfahrens.

Zur Erhöhung der Ressourceneffizienz und Dienste-Qualität bei der Übertragung von Daten über Funkverbindungen werden Multi-Funkverbindungs-Kommunikationssysteme entwickelt, in denen eine einzige Teilnehmerstation mittels einer oder mehrerer geeigneter Schnittstellen gleichzeitig parallel auf verschiedene Ressourcen zugreifen kann. Insbesondere soll der Zugriff auf Ressourcen technologisch verschiedenartiger Funk-Kommunikationssysteme ermöglicht werden, so dass die Teilnehmerstation beispielsweise parallel sowohl eine Mobilfunk-Kommunikationsverbindung als auch eine Funkverbindung zu einem lokalen Datennetz betreiben kann. Insbesondere soll dabei eine Aufteilung einer Abfolge von zueinander gehörenden Daten, beispielsweise eines gemeinsamen Dienstes, aufgeteilt über die verschiedenen Ressourcen übertragen werden können.

Die Aufteilung der Daten erfolgt dabei auf MAC- oder IP-Ebene (MAC: Media-Access-Control, IP: Internet-Protocol), wobei MAC eine Schnittstelle zwischen einer logischen Verbindungssteuerung und der physikalischen Schicht eines Netzes an einem Knoten ausbildet und für verschiedene physikalische Medien unterschiedlich ausgestaltet ist. Insbesondere unterscheiden sich die Metriken, welche sich durch Aufteilung in Funkkanäle, Qualität, Datenfluss und Operatoranforderungen ergeben. Multi-Funkverbindungs-Kommunikationssysteme bieten somit eine Diversität über verschiedene Ressourcen, welche Funkzugriffe ermöglichen.

Geplant sind insbesondere drei Formen der Übertragung. Die erste Form besteht in einer so genannten geschalteten MRTD (Multi-Radio Transmission Diversity), wobei Pakete eines Datenflusses sequenziell und alternativ über nur eine Ressource übertragen werden, welche für MRTD verfügbar ist. Gemäß einer zweiten Form, einer so genannten parallelen MRTD, werden die Pakete eines Datenflusses simultan über mehrere verfügbare Ressourcen übertragen, wobei jedes Paket nur über eine einzige der Ressourcen übertragen wird. Gemäß der dritten Form findet ein paralleles MRTD mit Redundanz statt, wobei die Pakete eines Datenflusses simultan über die Ressourcen übertragen werden, welche für MRTD verfügbar sind, und wobei zusätlich eine Kopie eines jeden Paketes parallel über alle für MRTD ausgewählten Ressourcen übertragen wird.

Allgemein bekannt ist ein so genanntes Multihoming aus J.Luo et al, "Affecting Factors for Joined Radio Resource Management and a Realisation in a Reconfigurable Radio System", WWRF 13th Meeting, Jeju-Island, Korea, 2.-3. März 2005, und J.Luo R.Mukerjee, M.Dillinger, E.Mohyeldin und E.Schulz, "Investigation on Radio Resource Scheduling in WLAN coupled with 3G-Cellular Network", IEEE-Communication Magazine, Juni 2003. Weitere Grundlagen sind beschrieben in J.Luo etc., "Gain Analysis of Joined Radio Resource Management for Reconfigurable Terminals", Multiradio Multimedia Communications (MMC 2003), Dortmund, Germany, 26.-27. Februar 2003, und Alex C.Snoeren, "Adaptive Inverse Multiplexing for Wide Area Wireless Networks", Proc. of IEEE GlobeCom, Rio de Janeiro, Dezember 1999.

Derzeitige Lösungen für eine Datenübertragung sind bei einem solchen System bzw. Zugriffsverfahren jedoch mit Blick auf Energieverbrauch und Signalisierungsaufwand aufwändig. In nachteilhafter Weise scannt eine Teilnehmerstation alle der verfügbaren Ressourcen in Form der verschiedenen Funkzugriffsmöglichkeiten und deren eigentliche innerhalb derartiger Ressourcen verfügbaren Sub-Ressourcen, welches viel Leistung und Signalisierungsaufwand bedingt. Im Fall beispielsweise eines Multi-Funkverbindungs-Zugriffsnetzes mit zwei Ressourcen, z.B. GPRS (General Paket Radio Service) mit 128 Kbps bzw. WLAN (Wireless Local Area Network/ Funkgestütztes lokales Datennetz) mit 37 Mbps effektiver Netto-Datenrate, und mit einer mobilen Teilnehmerstation, welche beide Ressourcen unterstützt, wird jedes Datenpaket alternativ über eine Ressource der beiden Ressourcen übertragen, falls geschaltetes MRTD ausgewählt ist. Falls ein Datei-Download (Herunterladen) aus dem Internet auf die mobile Teilnehmerstation durchgeführt werden soll, ist der Vorteil hinsichtlich eines Leistungsgewinns durch die Verwendung von GPRS zusätzlich zu WLAN vernachlässigbar, selbst falls die Kosten des geschalteten MRTD, beispielsweise durch eine Schaltverzögerung, vernachlässigbar sind.

Patentschrift WO 2005/055524 A1 beschreibt ein MRTD Multi-Funkverbindungs-Kommunikationssystem, bei dem eine Koordinierungseinrichtung ATC Server Netzinformationen bezüglich verfügbarer Ressourcen, welche zum Übertragen von Daten verfügbar sind, an Teilnehmerstationen überträgt und die Teilnehmerstationen auf Basis dieser Netzinformationen Ressourcen zur parallelen Übertragung von Daten auswählen.

Immer dann, wenn verfügbare Ressourcen einer Teilnehmerstation verschiedene Charakteristika bieten, beispielsweise 128 Kbps auf einem GPRS-Kanal und 30 Mbps auf einem WLAN-Kanal, besteht die Gefahr einer Verschlechterung der Leistungsfähigkeit. Je größer der Unterschied der Datenraten zwischen den verwendeten Ressourcen ist, desto geringer ist der Vorteil des MRTD, welches auch Ressourcen mit geringer Datenrate aufweist, hinsichtlich der Gesamtdatenrate.

Gemäß einem zweiten nachteilhaften Aspekt besteht eine zunehmende Wahrscheinlichkeit eines Puffer-Überlaufs bei der empfangenden Teilnehmerstation im Fall eines zunehmend größeren Datenraten-Unterschieds zwischen den verwendeten Ressourcen aufgrund einer Verzögerungswirkung, welche durch die langsame Ressource bedingt ist, falls MAC-Segmente/IP-Pakete neu angefordert werden, um diese empfängerseitig in der richtigen Reihenfolge zu erhalten. Nachteilhaft ist außerdem, dass ein hochgradig belastetes Funknetz zu einer schlechten Ressourcenverbindung aufgrund von Interferenz oder einer hohen Ausfall-/Blockier-Rate führt, was beobachtbar ist auf der Netz- oder Transportschicht im Fall von so genannten ARMH (Adaptive Radio Multi-Homing) oder IP-Layer-Multi-Homing.

Die Aufgabe der Erfindung besteht darin, ein Verfahren zum Betreiben einer Funk-Kommunikation in einem Multi-Funkverbindungs-Kommunikationssystem gemäß insbesondere dem MRTD-Konzept zu verbessern, sowie eine geeignete Vorrichtung und eine geeignete Teilnehmerstation zum Durchführen eines solchen Verfahrens vorzuschlagen.

Diese Aufgabe wird gelöst durch ein Verfahren zum Betreiben einer Funk-Kommunikation in einem Multi-Funkverbindungs-Kommunikationssystem, durch eine Vorrichtung eines Multi-Funkverbindungs-Kommunikationssystems zum Ausführen eines solchen Verfahrens sowie durch eine Teilnehmerstation mit den Merkmalen der unabhängigen Patentansprüche. Vorteilhafte Ausgestaltungen sind Gegenstand abhängiger Patentansprüche.

Bevorzugt wird demgemäß ein Verfahren zum Betreiben einer Funk-Kommunikation in einem Multi-Funkverbindungs-Kommunikationssystem, bei dem mittels einer Koordinierungseinrichtung eine Netzinformation bezüglich verfügbarer Ressourcen, welche zum Übertragen von Daten verfügbar sind, an Netzeinrichtungen und/oder an Teilnehmerstationen übertragen wird, wobei die Netzinformation die verfügbaren Ressourcen zu Sets zuordnet und die Ressourcen verschiedener Sets gemäß zumindest jeweils einer gemeinsamen Set-Eigenschaft zugeordnet werden.

Vorteilhaft ist ein Verfahren, bei dem durch eine eigenständige netzseitige Einrichtung die Funktionalität der Koordinierungseinrichtung bereitgestellt wird und die Netzinformation an Netzeinrichtungen technologisch verschiedenartiger Kommunikationssysteme übertragen wird.

Vorteilhaft ist ein Verfahren, bei dem die Netzinformation an die Teilnehmerstation übertragen wird, welche parallel über zumindest zwei verschiedene Ressourcen kommunizieren kann, wobei die Teilnehmerstation das Übertragen der Daten über zumindest zwei von der Netzinformation abhängig ausgewählte Ressourcen durchführt.

Vorteilhaft ist ein Verfahren, bei dem eine Zusatz-Information von der Teilnehmerstation zum Aktualisieren der Netzinformation an eine netzseitige Einrichtung übertragen wird, wobei die Zusatz-Information einen Informationsinhalt aufweist, der gegenüber einer durch die Teilnehmerstation empfangenen Netzinformation bezüglich einer durch die Teilnehmerstation erfassten Verfügbarkeit der Ressourcen abweicht.

Vorteilhaft ist ein Verfahren, bei dem gleichartige Datenanteile von Daten eines Dienstes über verschiedene Ressourcen eines Sets übertragen werden.

Vorteilhaft ist ein Verfahren, bei dem die Sets von der Koordinierungseinrichtung für die Teilnehmerstation individuell bereitgestellt werden.

Vorteilhaft ist ein Verfahren, bei dem verschiedenartige Datenanteile von Daten eines Dienstes über Ressourcen verschiedener Sets übertragen werden.

Vorteilhaft ist ein Verfahren, bei dem die verschiedenen Datenanteile als einerseits Basis-Informationen und andererseits Zusatzinformationen des Dienstes übertragen werden. Vorteilhaft ist ein Verfahren, bei dem die Datenanteile gebildet sind aus einerseits Echtzeit-Daten und andererseits Nicht-Echtzeit-Daten.

Vorteilhaft ist ein Verfahren, bei dem den verschiedenen der Sets als deren Set-Eigenschaft eine jeweils vergleichbare erzielbare, insbesondere zeitabhängige Datenrate für das Übertragen der Daten zugeordnet ist.

Vorteilhaft ist ein Verfahren, bei dem den verschiedenen der Sets als deren Set-Eigenschaft eine Dienste-Eigenschaft zugeordnet ist.

Vorteilhaft ist ein Verfahren, bei dem als Dienste-Eigenschaft eine lokale oder überregionale Verfügbarkeit zugeordnet ist.

Vorteilhaft ist ein Verfahren, bei dem als Dienste-Eigenschaft ein Umfang einer Teilnehmer- oder Teilnehmerstations-Zugriffsberechtigung eines mit der Teilnehmerstation kommunizierenden Teilnehmers oder der Teilnehmerstation zugeordnet ist.

Vorteilhaft ist ein Verfahren, bei dem die Zuordnung der verfügbaren Ressourcen zu den Sets bei Änderungen der Verfügbarkeit aktualisiert wird und/oder für verschiedene der Sets zu verschiedenen zeitlichen Abständen aktualisiert wird.

Vorteilhaft ist ein Verfahren, bei dem die Zuordnung der verfügbaren Ressourcen abhängig von einer momentanen Netzauslastung durchgeführt wird.

Bevorzugt wird eine Vorrichtung eines Multi-Funkverbindungs-Kommunikationssystems zum Ausführen eines solchen Verfahrens mit einer Schnittstelle zum Übertragen einer Netzinformation bezüglich verfügbarer Ressourcen zwischen Netzeinrichtungen untereinander oder zwischen einer Netzeinrichtung und einer Teilnehmerstation und mit einer Steuereinrichtung zum Bereitstellen der Netzinformation mit Sets verfügbarer Ressourcen, wobei die Ressourcen innerhalb der verschiedenen Sets jeweils eine gemeinsame Set-Eigenschaft aufweisen.

Vorteilhaft ist eine Vorrichtung, bei der die Steuereinrichtung in einer eigenständigen Koordinierungseinrichtung angeordnet ist, welche zum Kommunizieren mit Netzeinrichtungen verschiedener Kommunikationssysteme und zum Berücksichtigen der Ressourcen der verschiedenen Kommunikationssysteme ausgelegt ist.

Vorteilhaft sind ein Verfahren bzw. eine Vorrichtung, bei denen die verschiedenen Ressourcen Funk-Ressourcen technologisch verschiedenartiger Kommunikationssysteme sind, insbesondere die Funk-Ressourcen Mobilfunk-Kommunikationssystemen und/oder lokalen Funkdatennetzen zugeordnet sind.

Vorteilhaft sind ein Verfahren bzw. eine Vorrichtung, bei denen die verschiedenen Ressourcen verschiedene Funk-Ressourcen eines einzelnen Kommunikationssystems sind.

Vorteilhaft ist eine Teilnehmerstation eines Multi-Funkverbindungs-Kommunikationssystems zum Ausführen eines solchen Verfahrens mit einer Schnittstelle zum Übertragen einer Netzinformation bezüglich verfügbarer Ressourcen von oder zu einer netzseitigen Koordinierungseinrichtung und zum Auswählen zumindest zweier Ressourcen zur parallelen Übertragung von Daten abhängig von einem durch die Teilnehmerstation ausgewählten Set der übertragenen Sets.

Unter dem Übertragen von Daten ist dabei vorzugsweise sowohl das Senden als auch das Empfangen von Daten zu verstehen. Daten können aus allgemein zu übertragenden Anwender- bzw. Nutzdaten aber auch aus Signalisierungen bestehen. Unter dem Begriff Ressource ist allgemein eine Funkverbindungs-Zugriffsmöglichkeit über ein beliebiges verfügbares Funknetz und den damit verbundenen Übertragungskapazitäten zu verstehen. Entsprechend findet vorzugsweise eine Berücksichtigung von verfügbaren Ressourcen in Form von Netzzugriffen technologisch verschiedenartiger Funkzugriffsysteme statt. Unabhängig davon können für einzelne Anwendungsfälle auch Ressourcen in Form von verschiedenartigen Trägern, wie z.B. Frequenzen, und Diversitätsverfahren etc. eines einzelnen Kommunikationssystems vorteilhaft für die Umsetzung des Verfahrens angewendet werden, ohne dabei zwingend auf eine Ressource eines technisch andersartigen Kommunikationssystems zugreifen zu müssen.

Vorzugsweise wird eine Einteilung der verfügbaren Ressourcen in Gruppen (engl. Set) vorgenommen, wobei eine Zuordnung der verfügbaren Ressourcen zu den Gruppen entsprechend gemeinsamer Eigenschaften erfolgt, so dass bei gleichzeitigem Zugriff auf Ressourcen einer Gruppe von einer bezüglich der Gruppen-Eigenschaft optimierten Funk-Übertragungsmöglichkeit ausgegangen werden kann. Eine Teilnehmerstation bekommt die verfügbaren Gruppen als eine Netzinformation übermittelt und kann anschließend eine für ihre momentanen Zwecke geeignete Gruppe auswählen. Denkbar ist dabei auch, dass der Teilnehmerstation durch das Netz signalisiert wird, welche Gruppe diese wählen soll. Für Funkverbindungen werden von der Teilnehmerstation nachfolgend Ressourcen verwendet, welche in der ausgewählten Gruppe angegeben sind.

Die Gruppen-Eigenschaften, welche als Zuordnungskriterium verwendet werden, können dabei unterschiedlicher Natur sein. Ein höchster MRTD-Datendurchsatz wird erzielt, falls Ressourcen mit gleichen Charakteristika, z.B. vergleichbaren Datenraten, für MRTD verwendet werden. So kann beispielsweise eine Untergliederung nach Übertragungsraten der verschiedenen Ressourcen vorgenommen werden, so dass Ressourcen mit einer ähnlichen Datenrate, die den Erfordernissen der zu übertragenden Anwendung entsprechen, einer hoch priorisierten Gruppe zugeordnet werden, während Ressourcen mit einer stark unterschiedlichen, insbesondere typischerweise höheren Datenrate einer nieder priorisierten Gruppe zugeordnet werden, um z.B. gelegentlich auftretende Lastspitzen abzudecken.

Alternativ oder zusätzlich können aber auch weitere Kriterien bei der Zuordnung der Ressourcen zu den Gruppen als Gruppen-Eigenschaften herangezogen werden. Beispielsweise kann eine Unterscheidung vorgenommen werden, ob es sich bei der Ressource um eine üblicherweise überregional verfügbare Ressource handelt, z.B. um ein Mobilfunk-Kommunikationssystem gemäß z.B. GSM (Global System for Mobile Communication) oder UMTS (Universal Mobile Telecommunications System), oder um eine nur regional verfügbare Ressource, z.B. ein um ein lokales Datennetz gemäß einem WLAN- oder WiMAX-Standard. Berücksichtigbar ist somit eine Netzverfügbarkeit bzw. räumliche Netzabdeckung.

Eine weitere mögliche Gruppen-Eigenschaft ist z.B. die Möglichkeit einer Authentisierung und Autorisierung der Teilnehmerstation gegenüber netzseitigen Vorrichtungen, wie im Fall von Mobilfunk-Kommunikationssystemen. Bei der Zusammenstellung der Netzinformation in Form der verschiedenen Gruppen können auch eine momentane Netzauslastung oder individuelle Vertragsoptionen bzw. Berechtigungen der jeweiligen kommunizierenden Teilnehmerstation berücksichtigt werden. Entsprechend kann die Netzinformation individuell für eine sich beim Netz anmeldende oder mit dem Netz kommunizierende Teilnehmerstation erstellt und zu der Teilnehmerstation übertragen werden. Möglich ist auch die Übertragung einer generellen Netzinformation an alle Teilnehmerstationen und eine entsprechende Auswahl einer verfügbaren Gruppe durch die Teilnehmerstation aufgrund deren Optionen und Zugriffsrechten.

Letztendlich können insbesondere durch die Teilnehmerstation auch momentane Geschwindigkeiten einer sich bewegenden mobilen Teilnehmerstation berücksichtigt werden, da in einem solchen Fall z.B. der Zugriff auf lokale Datennetze stets nur temporär möglich ist.

Eine weitere vorteilhafte Ausnutzung bietet sich im Falle von einerseits Echtzeitdaten (RT - Real Time) und andererseits Nicht-Echtzeitdaten (NRT - Non-Real Time) wie im Falle einer zu übertragenden E-mail, wenn als Echtzeitdaten z.B. eine allgemeine Kopfinformation über ein Mobilfunk-Kommunikationssystem zur schnellen Information an die Teilnehmerstation weitergeleitet wird, während der Anhang, d.h. die eigentlichen Nutzdaten, parallel oder gegebenenfalls sogar erst zu einem späteren Zeitpunkt über ein ebenfalls an das Internet angeschlossenes lokales Datennetz mit einer höheren Übertragungsrate oder günstigeren Übertragungsbedingungen übertragen werden. Ein weiteres Beispiel einer Skalierbarkeit als einer Dienste-Eigenschaft ist eine Übertragung von Bilddaten, welche z.B. einer diskreten CosinusTransformation unterzogen wurden und als hoch priorisierte Datenkontur-Informationen und als nieder priorisierte Daten Füllinformation wie Farbwerte umfassen. Auch in einem solchen Fall bietet sich eine Aufteilung der Gesamtheit der Daten entsprechend der Priorisierung auf zwei verschiedene Ressourcen an, da die höher priorisierten Konturdaten von grundlegender Bedeutung für eine Bild-Rekonstruktion sind, während die nieder priorisierten Fülldaten gegebenenfalls auch per Interpolation ersetzt werden können oder notfalls auch gänzlich entfallen können.

Ein Ausführungsbeispiel wird nachfolgend anhand der Zeichnung näher erläutert. Es zeigen:
- FIG 1: schematisch Vorrichtungen technologisch verschiedenartiger Kommunikationssysteme und eine Teilnehmerstation, welche gleichzeitig bzw. parallel über mehrere derart angebotene Ressourcen eine Funk-Kommunikation durchführt,
- FIG 2: als zu der Teilnehmerstation übertragene Netzinformationen zwei Tabellen mit verschiedenen Gruppen aus verfügbaren Ressourcen, und
- FIG 3: eine Untergliederung in verschiedene Typen von Gruppen sowie deren Aktualisierungszyklen.

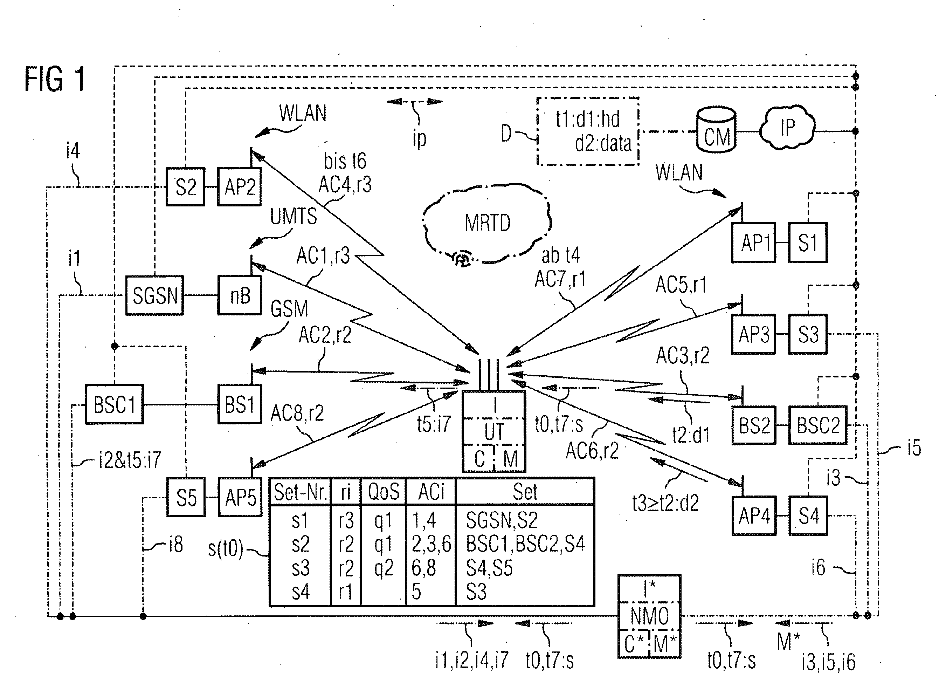

FIG 1 zeigt eine beispielhafte Teilnehmerstation UT, welche als stationäre oder mobile Vorrichtung mit einer Schnittstelle I für einen funkgestützten Zugriff auf verschiedenartige Ressourcen zum Betreiben einer Funk-Kommunikation in einem Multi-Funkverbindüngs-Kommunikationssystem MRTD zugreifen kann. In üblicher Art und Weise weist die Teilnehmerstation UT eine Steuereinrichtung C zur Steuerung ihrer Funktionen und eine Speichereinrichtung M zum Speichern von betriebsrelevanten Daten und Anwenderdaten auf. Anstelle einer einzigen Schnittstelle I können auch mehrere speziell auf die verschiedenen Technologien zugeschnittene Schnittstellen bereitgestellt sein, welche dann miteinander verbunden sind oder über die Steuereinrichtung C entsprechend angesteuert werden, um bei Bedarf eine gleichzeitige bzw. parallele Funk-Kommunikation über zwei oder mehr verfügbare Ressourcen AC1 - AC8 durchzuführen. Optional kann auch nur eine verfügbare Ressource gewählt werden, wenn keine geeignete zweite Ressource verfügbar oder erforderlich ist.

Netzseitig weist das Multi-Funkverbindungs-Kommunikationssystem MRTD beispielsweise drei technologisch verschiedene Funk-Kommunikationssysteme auf. Für einen Teil der Funk-Kommunikationssysteme befinden sich mehrere logisch oder physikalisch verschiedene Zugangsmöglichkeiten bzw. Ressourcen zu den jeweiligen technologisch verschiedenen Funk-Kommunikationssystemen im momentanen Funkbereich der Teilnehmerstation UT. Beispielsweise ist stellvertretend für ein erstes Funk-Kommunikationssystem eine zentrale Steuereinrichtung SGSN mit einer gemäß dem UMTS-Standard arbeitenden angeschlossenen Basisstation bzw. Funk-Schnittstelle nB verfügbar. Dadurch wird eine erste verfügbare Ressource AC1 für die Teilnehmerstation UT zum Aufbau einer Funk-Kommunikationsverbindung mit einer ersten sehr hohen Datenrate r3 bereitgestellt. Außerdem sind beispielhaft zwei zentrale Steuereinrichtungen BSC1, BSC2 mit daran entsprechend angeschlossenen Basissationen bzw. Funk-Schnittstellen BS1 bzw. BS2 gemäß dem Mobilfunkstandard GSM bereitgestellt, welche zwei weitere verfügbare Ressourcen AC2, AC3 mit einer zweiten mittelhohen Datenrate r2 für die Teilnehmerstation UT ausbilden. Bei diesen ersten bis dritten Ressourcen AC1 - AC3 handelt es sich somit um Ressourcen, welche zugleich eine Authentisierung und Autorisierung beim Anmelden der Teilnehmerstation UT im Rahmen des Aufbaus einer Funk-Kommunikationsverbindung ermöglichen. Außerdem sind derartige Mobilfunknetze üblicherweise als überregionale und zumeist flächendeckende Funkverbindungs-Kommunikationssysteme verfügbar.

Stellvertretend für eine dritte Technologie von Funkverbindungs-Kommunikationssystemen sind lokale Datennetze gemäß dem WLAN-Standard abgebildet, welche vorwiegend durch jeweils einen Server S1 - S5 und jeweils einen daran angeschlossenen Zugangspunkt AP1 - AP5 skizziert sind. Diese bieten der Teilnehmerstation UT je nach Ausgestaltung verschiedene Datenraten von einer sehr hohen Datenrate r3 im Fall des zweiten Zugangspunktes AP2, einer mittleren Datenrate r2 im Fall des vierten und des fünften Zugangspunktes AP5 und einer niedrigen Datenrate r1 im Fall des dritten und des ersten Zugangspunktes AP1 an. Je nach dem aktuellen Aufenthaltsort bestehen dadurch für die Teilnehmerstation UT Zugriffsmöglichkeiten auf weitere vierte bis achte Ressourcen AC4 - AC8, wobei es sich beispielsweise um lokale Funkverbindungs-Zugänge ohne Authentisierungsmöglichkeit und ohne Autorisierungsmöglichkeit handelt.

Bei dem dargestellten Ausführungsbeispiel des Multi-Funkverbindungs-Kommunikationssystems MRTD übernimmt eine Koordinierungseinrichtung NMO als ein physisch und/oder logisch softwaretechnisch ausgestalteter Netz-Management-Operator in Form einer eigenständigen Vorrichtung eine Koordination des Gesamtsystems. Möglich ist auch eine Integration einer solchen Koordinierungseinrichtung in eines der beispielhaften Kommunikationssysteme bzw. in eine der entsprechenden Steuereinrichtungen oder einen der Server. Die Koordinierungseinrichtung NMO weist zur Koordinierung der verschiedenen verfügbaren Ressourcen AC1 - AC8 eine Verbindung zu den jeweiligen zentralen Steuereinrichtungen SGSN, BSC1, BSC2 und Servern S2 - S5 auf. Zu dem ersten Server S1 besteht nach dem dargestellten Beispiel jedoch keine direkte Verbindung seitens der Koordinierungseinrichtung NMO.

Die Koordinierungseinrichtung NMO koordiniert die Übertragung von Daten zwischen den verschiedenen zentralen Steuereinrichtungen SGSN, BSC1, BSC2 und Servern S1 - S5, soweit diese entsprechend auf einen gemeinsam zugreifbaren Datenbestand zugreifen können. Bei einem solchen gemeinsam zugreifbaren Datenbestand kann es sich beispielsweise um eine zentrale Speichereinrichtung CM handeln, welche über das Internet IP und entsprechende Zugangsverbindungen ip der verschiedenen Funkverbindungs-Kommunikationssysteme zugreifbar ist. Alternativ oder zusätzlich koordiniert die Koordinierungseinrichtung NMO die Übertragung von Daten zwischen den verschiedenen Funkeinrichtungen bzw. Funksteuereinrichtungen nB, BS1, BS2, AP1 - AP5 direkt. Dies erhöht den MRTD-Gewinn weiter, da die Koordinierungseinrichtung dann näher an der Funkschnittstelle liegt. Im Idealfall für MRTD wird eine Multi-Funkverbindungs-Basisstation mit integrierter Koordinierungseinrichtung bereitgestellt.

Zur Koordinierung werden zwischen den verschiedenen Funkverbindungs-Kommunikationssystemen und der Koordinierungseinrichtung NMO Signalisierungen und Informationen übertragen. Dabei empfängt die Koordinierungseinrichtung NMO erste Netzinformationen i1 - i6, i8 von den Funkverbindungs-Kommunikationssystemen SGSN, BSC1, BSC2, AP2 - AP5, wobei die ersten Netzinformationen i1 - i6, i8 Verfügbarkeitsinformationen und Eigenschaftsinformationen der jeweiligen Funkverbindungs-Kommunikationssysteme SGSN, BSC1, BSC2, AP2 - AP5 an die Koordinierungseinrichtung NMO übermitteln. Die Koordinierungseinrichtung NMO überträgt an die Funkverbindungs-Kommunikationssysteme SGSN, BSC1, BSC2, AP2 - AP5 ihrerseits Netzinformationen zu deren Steuerung und eine Netzinformationen s zur Steuerung der kommunizierenden Teilnehmerstation UT.

Die Koordinierungseinrichtung NMO weist insbesondere im Fall einer eigenständigen Koordinierungseinrichtung vorteilhafter Weise eine Steuereinrichtung C* zur Koordinierung ihres Betriebes und der Kommunikation mit den verschiedenen Einrichtungen der diversen Kommunikationssysteme und eine Schnittstelle I* zum Durchführen der Kommunikation mit weiteren Systemen auf. In einem Speicher M* werden Daten gespeichert, welche bezüglich der Verwaltung der diversen verfügbaren Ressourcen für die Koordinierungseinrichtung NMO relevant sind oder gegebenenfalls relevant werden können. Auch Informationen bezüglich Diensten, welche eine Teilnehmerstation UT wählen kann, werden vorteilhafterweise in dem Speicher M* hinterlegt. Ressourcen-abhängige Informationen sind.beispielsweise verfügbare Datenraten ri, r1 - r3 der Ressourcen. Als Dienste-Merkmale werden verschiedenartige Dienste-Eigenschaften q1, q2 in den Speicher M* hinterlegt, so dass die Steuereinrichtung C* auf eine Vielzahl verschiedenartiger Kriterien zugreifen kann, um die verfügbaren Ressourcen AC1 - AC8 entsprechend einer Vielzahl von Kriterien den verfügbaren Gruppen Set s1 - s4 geeignet zuzuordnen. Die Gruppen können dabei einheitlich für alle Teilnehmerstationen oder vorzugsweise auch speziell für individuelle Teilnehmerstationen UT bereit gestellt werden.

FIG 1 zeigt beispielhaft in tabellarischer Form den Aufbau einer Netzinformation s, welche zu einem Ausgangszeitpunkt t0 an die Teilnehmerstation UT übertragen wird, und der Teilnehmerstation UT den Zugriff auf aktuell für diese geeignete Ressourcen AC1 - AC8 ermöglichen soll. Die an die Teilnehmerstation UT übertragene Netzinformation s umfasst beispielsweise vier Gruppen Set s1 - s4 mit einer Zuordnung der verschiedenen Ressourcen ACi zu jeweils zumindest einer der Gruppen Set s1 - s4. In der Tabelle dargestellt sind außerdem zwei beispielhafte Kriterien für Gruppen-Eigenschaften, nach welchen die Koordinierungseinrichtung NMO die Gruppen Set s1 - s4 zusammenstellt.

Beispielsweise sind der höchst-priorisierten ersten Gruppe Set s1 die erste und die vierte Ressource AC1, AC4 zugeordnet, welche beide eine sehr hohe Datenrate r3 bieten, wobei als Anforderung an eine Dienste-Eigenschaft QoS, q1 seitens der Koordinierungseinrichtung NMO eine Zuordnung zu dieser ersten Gruppe Set s1 nur erfolgt, wenn zumindest eine Ressource AC1 eine Authentisierung der Teilnehmerstation UT ermöglicht. Bei Auswahl dieser ersten Gruppe Set s1 kann die Teilnehmerstation UT entsprechend über die erste und über die vierte Ressource AC1, AC4 zueinander parallel kommunizieren, wobei Daten gemäß UMTS bzw. gemäß WLAN übertragen werden können.

Eine zweite Gruppe Set s2 wird gebildet aus der zweiten, dritten und sechsten Ressource AC2, AC3, AC6, welche eine mittlere Datenrate r2 und ebenfalls zumindest eine Authentisierungsmöglichkeit bieten. Entsprechend kann die Teilnehmerstation UT bei Auswahl der zweiten Gruppe Set s2 auf drei der verfügbaren Ressourcen zugreifen. Einer dritten Gruppe Set s3 sind die.sechste und die achte Ressource AC6, AC8 zugeordnet, welche eine mittlere Datenrate r2 bieten und als Dienste-Güte q2 als lokale Datennetze eingestuft sind. Diese ermöglichen einen in der Regel kostengünstigeren Zugang als Mobilfunknetze. Einer vierten Gruppe Set s4 mit dem Kriterium der niedrigen Datenrate r1 ist lediglich die fünfte Ressource AC5 des dritten lokalen Datennetzes S3 zugeordnet. Die siebte Ressource AC7 ist mangels einer direkten Verbindung zum Austausch von ersten Netzinformationen i7 zwischen dem ersten Server S1 und der Koordinierungseinrichtung NMO beim Bilden der Gruppe Set s1 - s4 unberücksichtigt geblieben.

Nach dem Anmelden an einer der Funk-Schnittstellen BS2 erhält die Teilnehmerstation UT über diese Funk-Schnittstelle bzw. Basisstation BS2 die von der Koordinierungseinrichtung NMO erstellte Netzinformation s zu dem Ausgangszeitpunkt t0 übertragen. Je nach Ausgestaltung und Bedürfnissen wählt die Teilnehmerstation UT daraufhin für ihre nachfolgende Kommunikation Ressourcen einer der Gruppen aus, um je nach Bedarf über eine oder parallel mehrere von diesen Ressourcen zu kommunizieren.

Beispielsweise stehen für die Teilnehmerstation UT in der zentralen Speichereinrichtung CM Daten einer abrufbaren Email bereit, wobei das Email-System einen ersten beispielhaften Dienst D repräsentiert. Die zu einem ersten Zeitpunkt t1 bereitgestellten Daten werden dabei aus zwei verschiedenen Datenanteilen d1, d2 ausgebildet, welche letztendlich zusammengehören. Bei dem ersten Datenanteil d1 handelt es sich um eine möglichst schnell an die Teilnehmerstation UT zu übertragende Kopfinformation hd mit Basisdaten, welche eine Information über die Existenz einer abrufbaren Email liefern. Der zweite Datenanteil d2 besteht aus eigentlichen Nutzdaten und Anhängen, welche oftmals eine größere Datenmenge darstellen. Vorzugsweise werden entsprechend die ersten Datenanteile d1 über die Mobilfunk-Komponenten des ausgewählten zweiten Satzes übertragen, das heißt über die dritte Ressource AC3.

In der Teilnehmerstation UT liegt somit zu einem zweiten Zeitpunkt t2 eine Information vor, dass eine Email abrufbar ist, wobei gegebenenfalls bereits Informationen über den Absender, eine Betreff-Information und optional ein Zugriffsschlüssel mit vorliegen. Parallel zu der Übertragung der ersten Datenanteile d1 oder zu einem gegebenenfalls auch späteren Zeitpunkt t3 werden von der Teilnehmerstation UT die eigentlichen Daten als die zweiten Datenanteile d2 über ein lokales Datennetz abgerufen, wozu im zweiten und ausgewählten Satz s2 ein entsprechender Zugriff auf die sechste Ressource AC6 und darüber auf die zentrale Speichereinrichtung CM durchgeführt wird. Optional kann das Abrufen auch zu einem späteren Zeitpunkt erfolgen, wenn aktuell kein geeignetes lokales Datennetz verfügbar ist und für den Datenabruf genügend Zeit bis zum Erreichen eines geeigneten lokalen Datennetzes vorliegt. Möglich ist auch, für den Abruf einer großen Datenmenge eine Ressource einer höher priorisierten Gruppe Set s1 oder für den Abruf einer geringen Datenmenge eine niedriger priorisierte Gruppe Set s4 und entsprechend zugeordnete Ressourcen auszuwählen.

Bei dem dargestellten Ausführungsbeispiel der FIG 1 gelangt die Teilnehmerstation UT zu einem vierten Zeitpunkt t4 in den Funkbereich des ersten lokalen Datennetzes mit dem ersten Zugriffspunkt AP1, welcher die siebte Ressource AC7 bietet. In vorteilhafter Weise erkennt die Teilnehmerstation UT nach gegebenenfalls einem Informationsaustausch mit dem ersten Server S1, dass dieser eine Zugangsmöglichkeit zum Internet IP und der zentralen Speichereinrichtung CM ermöglicht, jedoch nicht in der Netzinformation s aufgelistet ist, welche zuvor zum Ausgangszeitpunkt t0 von der Koordinierungseinrichtung NMO bereitgestellt und empfangen wurde. Entsprechend übermittelt die Teilnehmerstation UT zu einem fünften Zeitpunkt t5 eine weitere Netzinformation i7, welche über die aktuell bestehende zweite Ressource AC2 und das erste Mobilfunk-System an die Koordinierungseinrichtung NMO übertragen wird. Die Koordinierungseinrichtung NMO erstellt nach Erhalt dieser weiteren Netzinformation i7 eine aktualisierte Netzinformation s und überträgt diese zu einem siebten Zeitpunkt t7 an die diversen angeschlossenen Systeme und insbesondere die Teilnehmerstation UT. Sofern die Teilnehmerstation UT nicht bereits selbst eine geeignete Zuordnung der siebten Ressource AC zu den geeigneten Sets s1 - s4 vorgenommen hat, sodass auch die neue, siebte Ressource AC7 berücksichtigt werden kann, kann die Teilnehmerstation UT nach Erhalt der aktualisierten Netzinformation s auch auf die neu verfügbare siebte Ressource AC7 zugreifen. Da es sich bei der siebten Ressource AC7 um ein lokales Datennetz mit der geringen Datenrate r1 handelt, wird diese dem vierten Set s4 zugeordnet.

Außerdem hat beispielhaft zu einem sechsten Zeitpunkt t6, d.h. vor der Übertragung der aktualisierten Netzinformation s ein Ausfall des zweiten lokalen Datennetzes mit der vierten Ressource AC4 stattgefunden, was über eine entsprechende weitere Netzinformation i4 oder ein Ausbleiben einer entsprechenden Kommunikation der Koordinierungseinrichtung NMO mitgeteilt wurde. Entsprechend entfällt in der ersten Gruppe Set s1 die Zugriffsmöglichkeit auf die vierte Ressource, d.h. auf den Zugriffspunkt AP2 des zweiten lokalen Datennetzes.

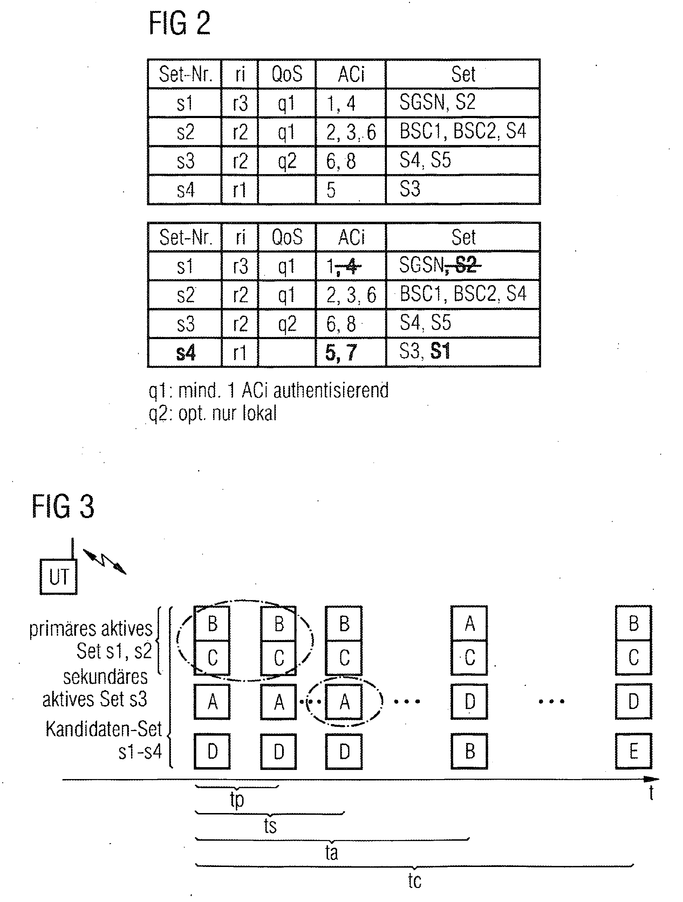

FIG 2 zeigt zusätzlich zu einer Tabelle der zum Ausgangszeitpunkt t0 übertragenen Netzinformation s eine zweite Tabelle mit der beschriebenen und zum siebten Zeitpunkt t7 übertragenen aktualisierten Netzinformation s. Neben einer Aktualisierung der Netzinformation s im Falle von Änderungen kann eine Aktualisierung in vorteilhafter Weise automatisch in regelmäßigen zeitlichen Abständen durchgeführt werden. Vorteilhaft ist dabei die Gruppen-Informationen der höherpriorisierten Gruppen Set s1, s2 in kürzeren zeitlichen Abständen zu aktualisieren als die Gruppen-Informationen der niedriger priorisierten Gruppen Set s3, s4.

Geboten wird durch eine solche Verfahrensweise bzw. entsprechende Vorrichtungen und Teilnehmerstationen eine Optimierung von MRTD-Leistungsfähigkeit bei gleichzeitiger Reduzierung des Leistungsverbrauchs ohne eine signifikante Erhöhung einer Steuersignalisierung durch Übertragung von Netzinformationen. s, i1 - i8 und ohne signifikante Veränderungen der Software von geeigneten Teilnehmerstationen UT.

Die Möglichkeit des Einsatzes von MRTD durch insbesondere mobile Teilnehmerstationen UT ist vorteilhaft überall dort möglich, wo verschiedene Ressourcen mit typischerweise unterschiedlichen Profilen und/oder Charakteristika verfügbar sind, wobei verfahrensgemäß eine effiziente Auswahl von Übertragungs-Modi der momentan verfügbaren Ressourcen geboten wird.

Eingeführt wird somit ein auf Teilnehmer- und Diensteklassen basierter Ansatz zum Auswählen der geeignetsten Ressourcen und Übertragungsmodi für MRTD, so dass eine möglichst gute MRTD-Ausnutzung hinsichtlich insbesondere des Durchsatzes erzielbar ist. Außerdem können, wenn eine geeignete MRTD-Übertragungs-Betriebsart ausgewählt ist, virtuell ähnliche Ressourcen-Kanäle für jede Teilnehmerstation gebildet werden, um optimale MRTD-Vorteile mit Blick auf das Gesamtsystem und den jeweiligen Teilnehmer auch in hoch ausgelasteten Verkehrszellen erzielen zu können.

Vorteilhafter Weise bietet ein Operator bzw. die Koordinierungseinrichtung NMO verschiedene Teilnehmerklassen mit dienste-spezifischen Leistungs-Charakteristika und Garantien an, wobei eine Anpassung an die jeweils aktuell verfügbaren und zugreifbaren heterogenen mobilen Infrastrukturelemente durchgeführt wird. Eine Vorauswahl von Ressourcen und Übertragungs-Modi wird erzielt, wobei eine möglichst gute Anpassung hinsichtlich der einzelnen Teilnehmer bzw. Teilnehmerstationen, des Verkehrs und der Dienste-Profile angestrebt wird. Ressourcen mit im Schnitt ähnlichen Leistungs-Charakteristika für MRTD sind vorteilhaft, um eine Multi-Funkverbindungs-Kooperation vorteilhaft auszugestalten. Vorzugsweise werden virtuell ähnliche Ressourcen für MRTD genommen, was zu einem erhöhten Gesamt-MRTD-Gewinn führt. Dies gilt insbesondere dann, wenn die verbleibende Kapazität der hoch leistungsfähigen Ressourcen im Fall einer Hochlastsituation für anderen Verkehr genutzt wird. Entsprechend findet eine Definition von Teilnehmer- und Diensteklassen, welche durch eine optimierende MRTD-Leistungsfähigkeit erzielt werden können, in Koordination mit einer Netzplanung und einem Multi-Funkverbindungs-Ressourcen-Management statt.

Für die Auswahl geeigneter Ressourcen und Übertragungsmodi für MRTD können die nachfolgenden allgemeinen Schritte im Zusammenhang mit Mechanismen für einen Trägerservice und RRM (Radio Resource Management/Funkressourcen-Management) vorteilhaft durchgeführt werden.

Gemäß einem ersten Aspekt wird zwischen einem Teilnehmer bzw. dessen Teilnehmerstation UT und der Koordinierungseinrichtung NMO eine so genannte Dienste-Level-Vereinbarung (SLA - Service Level Agreement) definiert, wobei eine Abbildung auf die Teilnehmerstation bzw. deren Nutzer vorgenommen wird, und wobei die Verfügbarkeit dedizierter multipler Ressourcen und deren Kooperation untersucht wird. Gemäß einem zweiten Aspekt werden die Sets s1 - s4 der Ressourcen AC1 - AC8 gebildet und Übertragungs-Modi und diesbezügliche Zeitskalen für MRTD ausgewählt.

Bevorzugt werden, wie dies auch aus FIG 3 ersichtlich ist, zwei Typen von Gruppen Set für die Ressourcen und drei MRTD-Übertragungs-Modi definiert wie folgt. Mit Blick auf die beiden Gruppen-Typen werden z.B. eine Kandidaten-Gruppe als Kandidaten-Funkzugriffs-Gruppe bzw. Kandidaten-Ressourcen-Gruppe und eine aktive Gruppe Set als eine weitere Ressourcen- bzw. Funkzugriffs-Gruppe gebildet. Der Kandidaten-Gruppe sind vorzugsweise alle Ressourcen für Funkzugriffe zugeordnet, welche an dem Ort der Teilnehmerstation UT eine minimal erforderliche durchschnittliche Signalqualität und die ausreichende Wahrscheinlichkeit einer Konnektivität erfüllen, und welche durch ein gemeinsames Funkressourcen-Management mit Blick auf eine langzeitige Existenz erfassbar sind. Die aktive Gruppe wird mittels des gemeinsamen Funkressourcen-Management vorzugsweise definiert aus allen Funkzugriffen bzw. Ressourcen, welche in der Kandidaten-Funkzugriffs-Gruppe enthalten sind. Die aktive Gruppe ist vorzugsweise wiederum unterteilt in eine aktive primäre Gruppe der Ressourcen und in eine sekundäre Gruppe der Ressourcen, wobei diesbezüglich eine hohe bzw. eine mittlere Zeitskala mit Blick auf Aktualisierungen angesetzt wird.

Hinsichtlich der Übertragungsmodi können insbesondere ein redundantes paralleles MRTD mit einer parallelen Übertragung von Paketen, welche einem Datenfluss zugeordnet sind, ein geschaltetes MRTD mit exklusiver Übertragung pro Paket der Daten und Zeitpunkt über eine einzige der aus der aktiven Gruppe zur Verfügung stehenden Ressourcen und ein paralleles MRTD mit einer alternierenden gleichzeitigen Übertragung von Paketen, welche einem Datenfluss zugeordnet sind, berücksichtigt werden, wobei dies insbesondere mit Blick auf die primäre aktive Ressourcen-Gruppe umgesetzt wird.

Vorzugsweise ist die Aktualisierungsperiode der Kandidaten-Gruppe größer als diejenige der aktiven Gruppe. Innerhalb der Periode zwischen Aktualisierungen der Kandidaten-Gruppe für die individuellen Teilnehmerstationen können die Koordinierungseinrichtung NMO oder die.Teilnehmerstationen UT vorzugsweise die Leistungsfähigkeit der aktiven Ressourcen überwachen, um auf die optimalen Ressourcen zuzugreifen. Die Überwachungs-Frequenz für die aktive primäre Gruppe und den auszuwählenden Übertragungsmodus sollte vorzugsweise zumindest der Einstellung der übergeordneten Aktualisierungshäufigkeit entsprechen.

Gemäß der bevorzugten Ausführungsform erfolgt eine Aktualisierung des bevorzugt auszuwählenden Übertragungsmodus vorzugsweise in einem gleich kurzen oder kürzeren Abstand als eine Aktualisierungsperiode der aktiven primären Gruppe. Deren Aktualisierungsperiode ist vorzugsweise wiederum kleiner als die Aktualisierungsperiode der aktiven sekundären Gruppe, sodass die aktive primäre Gruppe häufiger aktualisiert wird. Vorzugsweise ist die Aktualisierungsperiode der sekundären aktiven Gruppe kleiner als die Aktualisierungsperiode der aktiven Gruppe und diese wiederum vorzugsweise kleiner als die Aktualisierungsperiode der Kandidaten-Gruppe.

Die Funkzugriffs- bzw. Ressourcen-Gruppen und die Übertragungsmodi können auf verschiedene Art und Weise ausgewählt werden. Gemäß einer ersten beispielhaften Auswahlmöglichkeit wird eine aktive Ressourcen-Vorauswahl für eine Teilnehmerstation UT dynamisch durchgeführt unter Berücksichtigung einer Diensteklasse der Teilnehmerstation UT, welche Zugriffsmöglichkeiten, Anwendungen und Zugriffsrechte definiert. Berücksichtigt werden außerdem Kosten-Nutzen-Funktionen (CBF - Cost-Benefit-Functi.on), welche primär auf einem individuellen Ressourcenprofil beruhen, d.h. welche z.B. eine maximal akzeptierbare Bewegungsgeschwindigkeit der Teilnehmerstation UT und eine räumliche Abdeckungs-Kapazität mit Blick auf ein stabiles Profil berücksichtigen, um die Kandidaten-Gruppe ggf. für diese Teilnehmerstation individuell auszubilden. Außerdem beruht die Kosten-Nutzen-Funktions-Metrik u.a. auf einer mittleren Last und einer Wahrscheinlichkeit der offerierten Konnektivität der Kandidaten-Funkzugriffs-Systeme, auf welchen die Ressourcen angeboten werden. Dabei werden dynamische Profile verwendet, um die aktiven Gruppen aus den Ressourcen der Kandidaten-Gruppen zu bilden. Vorzugsweise werden für Teilnehmerstationen UT mit hoher Mobilität Systeme mit nur lokaler Präsenz wie lokale Funkdatennetze WLAN niedriger bewertet als überregional vertretene Ressourcen, wie beispielsweise Zugriffsmöglichkeiten auf Mobilfunknetze gemäß GSM. Dabei wird berücksichtigt, dass eine kontinuierliche Verbindung mit niedrigerer Rate im Fall insbesondere einer sich schnell räumlich bewegenden Teilnehmerstation UT oftmals mit Blick auf den Gesamtdurchsatz günstiger ist, als ein Zugriff auf jeweils nur kurzzeitig zugreifbare lokale Funkdatennetze WLAN.

Bei der aktiven Ressourcenvorauswahl werden vorzugsweise nachfolgende Regeln zum Erzeugen der CBF-Metriken für die Ressourcen verwendet. So wird eine Ressource, welche eine optimale Dienstegüte QoS bietet, mit der höchsten Metrik bewertet, beispielsweise im Fall einer Normierung mit einer 1 bewertet. Die Metriken für andere Ressourcen werden gemäß dieser Metrik normiert. Die optimale Dienstegüte QoS wird beispielsweise durch eine Ruf-Blockierungsrate, eine Bitfehlerrate, einen Verzögerungsfaktor und dergleichen bestimmt. In vorteilhafter Weise werden zueinander ähnliche Leistungsfähigkeiten von verschiedenen Ressourcen mit einer relativ hohen Metrik zueinander bewertet. Entsprechend werden vorzugsweise Ressourcen mit einer bedingt ähnlichen Leistungsfähigkeit als einer Gruppeneigenschaft jeweils einer gemeinsamen Gruppe zugeordnet, da für die Teilnehmerstation UT erfahrungsgemäß beste Ergebnisse erzielbar sind, wenn diese bei der Verwendung mehrerer Ressourcen zum Aufbau von Funkverbindungen auf Ressourcen mit vergleichbaren Bedingungen für die Übertragung zugreift. Vorzugsweise wird auch eine Ressourcenanpassung an den jeweiligen Dienst und die Mobilität der Teilnehmerstation UT mit einer hohen Metrik bewertet. Ein Funkdatennetz WLAN mit einer nur geringen räumlichen Abdeckung wird für einen hochmobilen Teilnehmer bzw. für dessen Teilnehmerstation mit einer niedrigen Metrik bewertet. Ressourcen-spezifische Kosten, wie beispielsweise eine Verzögerung aufgrund einer Zugriffsneuauswahl für eine bestimmte kooperierende aktive Gruppe und mit Blick auf einen erforderlichen Signalisierungsaufwand werden vorzugsweise ebenfalls berücksichtigt.

Innerhalb der aktiven Gruppe werden vorzugsweise zwei Ebenen von Untergruppen klassifiziert, wobei die Klassifizierung wiederum vorzugsweise durch ein gemeinsames Funkressourcen-Management mittels beispielsweise der Koordinierungseinrichtung NMO durchgeführt wird. Entsprechend werden die aktive primäre Gruppe und die aktive sekundäre Gruppe gebildet. Vorzugsweise wird eine Kanalstatusinformation der aktiven primären Gruppe mit der höchsten Frequenz bewertet und eine Kanalstatusinformation, beispielsweise durch Messen eines Pilotkanals, der aktiven sekundären Gruppe durch eine Messung mit geringerer Frequenz bewertet. Die Kandidaten-Gruppe wird bedingt durch die Verfügbarkeit aller prinzipiell vorhandenen Ressourcen mit der niedrigsten Frequenz aktualisiert.

FIG 3 zeigt diesbezüglich fünf beispielhafte Ressourcen, welche durch die Teilnehmerstation UT unterstützt werden. Skizziert ist die beschriebene Untergliederung und Zuordnung beispielhafter verfügbarer Ressourcen-Konfigurationen A - E, auf welche die Teilnehmerstation UT zugreifen kann.

Über einer Skala mit fortschreitender Zeit t sind die Zuordnungen zu Aktualisierungsintervallen dargestellt. Die Berichts- bzw. Aktualisierungsperiode der primären Gruppe Set s1, s2 ist dabei als kürzeste Aktualisierungsperiode tp skizziert. Nächst.länger ist eine Aktualisierungsperiode ts der sekundären Gruppe Set s3. Eine Aktualisierungsperiode ta der gesamten aktiven Gruppe Set s1 - s3 ist noch größer und eine Aktualisierungsperiode tc für die gesamt Kandidaten-Gruppe Set s1 - s4 ist am längsten.

Zu einem ersten Zeitpunkt besteht die primäre aktive Gruppe Set s1, s2 in dessen ersten Untergruppe s1 aus einer zweiten Konfiguration B, welche aus bestimmten der Ressourcen mit gleicher Gruppeneigenschaft oder mit annähernd vergleichbarer Gruppeneigenschaft gebildet werden. Die zweite Untergruppe S2 der primären aktiven Gruppe Set s1, s2 wird durch eine dritte Konfiguration C nach der Zeit 2·tp ausgebildet. Die aktive sekundäre Gruppe Set s3 wird zu dem ersten Zeitpunkt durch eine erste Konfiguration A gebildet und als vierte verfügbare Gruppe Set s4 wird eine vierte Konfiguration D bereitgestellt.

Zu einem zweiten Zeitpunkt nach Verstreichen der ersten Aktualisierungsperiode tp für die aktive primäre Gruppe Set s1, s2 werden nur deren Konfigurationen aktualisiert. Beim dargestellten Ausführungsbeispiel hat sich keine Veränderung ergeben. Wie aus dem gestrichelt umkreisten Abschnitt erkennbar ist, ergibt sich eine optimale Übertragungsschema-Auswahl zwischen den Kanalstatusinformationen bezüglich der primären aktiven Gruppe Set s1, s2. Nach Verstreichen der Aktualisierungsperiode ts der sekundären Gruppe Set s3, was der Darstellung der dritten Spalte entspricht, werden beispielsweise Bilddaten als Parameter von einem Trägerdienst eines höherschichtigen Protokolls aktualisiert. Zu diesem Zeitpunkt ist es möglich, dass die sekundäre Gruppe Set s3 den Teilnehmerverkehr befördert. Nach Verstreichen der Aktualisierungsperiode ta für die gesamte aktive Gruppe Set s1 - s3 sind beim dargestellten Ausführungsbeispiel Veränderungen bezüglich der Konfigurationen eingetreten. In der ersten Untergruppe s1 der primären aktiven Gruppe Set s1, s2 befinden sich nun die erste Konfiguration A, in der aktiven sekundären Gruppe Set s3, welche durch die dritte verfügbare Gruppe gebildet wird, befindet sich nun die vierte Konfiguration D, während die zweite Konfiguration B nur noch als langsamste Verbindung der vierten Gruppe Set s4 zugeordnet ist. Nach der Aktualisierungsperiode tc der gesamten Kandidaten-Gruppe s1 - s4 findet wiederum eine Neubewertung und Aktualisierung der Konfigurationen für die verschiedenen Gruppen Set s1 - s4 statt. Anstelle der ersten Konfiguration A taucht nun eine neue Konfiguration E als fünfte denkbare Konfiguration beispielhaft auf.

Innerhalb der Zustandsdauer der aktiven primären Gruppen Set s1, s2 kann ein schnelles Umschalten zwischen verschiedenen MRTD-Übertragungs-Modi, insbesondere zwischen redundanten parallelen MRTD, geschaltetem MRTD und parallelem MRTD erfolgen. Die optimale MRTD-Betriebsart-Auswahl basiert insbesondere auf der momentanen Kanalstatusinformation aus den primären Ressourcen und aus den Systemanforderungen und damit aus dem momentanen Ergebnis der Kosten-Nutzen-Funktion.

Die nachfolgenden beispielhaften Regeln für MRTD-Übertragungs-Modi können unter Berücksichtigung von entsprechenden Zeitskalen für eine Zeitplanung verwendet werden. Zum Beispiel sind minimale Signal-zu-Rausch-Werte der Ressourcen, welche in MRTD insbesondere als Schwellenwerte eingebunden sind, verwendbar, um eine durchführbare Übertragung zu entscheiden. Ressourcen mit einem aktuellen Signal-zu-RauschVerhältnis unterhalb der Schwellen führen zu einer zu hohen Bit-Fehlerrate. In vorteilhafter Weise können von der Teilnehmerstation UT Signal-zu-Rausch-Werte der Ressourcen AC1 - AC8 zu der Koordinierungseinrichtung NMO zurückberichtet werden, dies vorzugsweise nicht langsamer als die Kanaländerungen erfolgen und unter Berücksichtigung der Kohärenz-Zeit, um einen optimalen MRTD-Modus zu wählen. Falls der momentane Signal-zu-Rausch-Wert von einer der Ressourcen dominiert wird, wird der geschaltete MRTD-Modus gewählt, bei welchem aufeinander folgende Daten wahlweise von einer mehrerer verfügbarer Ressourcen, nämlich der günstigsten empfangen werden. Falls die momentanen Signal-zu-Rausch-Werte aller der Ressourcen größer als der minimale Schwellenwert für paralleles MRTD ist, welcher für jede individuelle einzelne Ressource erforderlich ist, wird der parallele MRTD-Modus unter Berücksichtigung der Gesamtauslastung der verwendeten Ressource und der Geschäftspolitik des Betreibers gewählt, bei welchem ein Teil der Daten über eine erste Ressource und ein anderer Teil der Daten über eine zweite Ressource empfangen wird. Falls die aktuellen Signal-zu-Rausch-Werte aller der Ressourcen zwar vergleichbar, jedoch geringer als der minimale Schwellenwert für paralleles MRTD sind, und falls hoch priorisierte Daten zu übertragen sind, wird redundantes paralleles MRTD gewählt, bei dem alle Daten parallel über mehrere der verfügbaren Ressourcen übertragen werden. Berücksichtigt werden können dabei auch spezifische Kosten der Übertragungsbetriebsart, beispielsweise eine Verzögerung aufgrund einer Zugriffs-Neuauswahl für ein bestimmtes kooperierendes aktives Ressourcen-Set und eine erforderliche Signalisierungs-Überbelastung.

Die aktive zweite Gruppe Set s3 wird vorzugsweise ebenfalls einer hochschichtigen Verbindung zugeordnet und dient für einen potenziell hohen Spitzendurchsatz für elastischen bzw. variablen Verkehr oder für eine geringe Konnektivität, wobei beispielsweise lokale Datennetze zugeschaltet werden.

Als eine weitere zusätzliche oder alternative Auswahlmöglichkeit können aktive Ressourcen für ein Terminal bzw. eine Teilnehmerstation von Zeit zu Zeit aktualisiert werden, beispielsweise zur Anpassung an Laständerungen der Ressourcen.

Ein weiteres mögliches Auswahl-Kriterium besteht darin, weitere Ressourcen, welche nicht in der Kandidaten-Gruppe enthalten sind, mit einer vorzugsweise noch geringeren zeitlichen Frequenz zu überwachen, um die Batterie der Teilnehmerstation UT zu schonen und einen Signalisierungsüberhang zu reduzieren. Nach Erfassen einer solchen weiteren Ressource kann die Teilnehmerstation UT entsprechende Informationen an die Koordinierungseinrichtung weiterleiten.

Möglich ist, dass die Verbindungen zwischen der primären aktiven Gruppe Set s1, s2 und der sekundären aktiven Gruppe Set s3 hin und her wechseln. Wenn dies auftritt, werden vorteilhaft insbesondere Dienste höherer Schichten, beispielsweise eine Quellcodierung eines Videocodex, eines anderen Kommunikationspartners für einen besser geeigneten Dienst rekonfiguriert. Heranziehbar sind dabei entweder ein entfernter Server oder eine Basisstation für eine Downlink-Verbindung oder für eine Uplink-Verbindung der Teilnehmerstation UT.

Immer, wenn neue Dienste eingeführt werden oder angewendet werden, wird die aktive Gruppe Set s1 - s3 vorteilhaft ebenfalls aktualisiert. Falls beispielsweise die Teilnehmerstation UT den Dienst von einem Echtzeit-Sprachdienst zu einem zeitlich nicht beschränkten Datendienst ändert, kann z.B. eine Ressource mit einer hohen Datenrate aber geringer Abdeckung wie ein lokales Datennetz zugewiesen werden, um eine höhere Metrik zu erzielen, wobei der Rang der aktiven Ressourcen-Gruppe aktualisiert wird.

In vorteilhafter Weise werden Übertragungs-Diversitäts-Probleme durch neue Zuordnungsverzögerungen von Paketen aufgrund zu großer Unterschiede der Übertragungsgeschwindigkeiten von willkürlich ausgewählten Ressourcen und ein möglicher Pufferspeicher-Überlauf beim Empfänger reduziert, indem die Auswahl aktiver Ressourcen-Gruppen und Übertragungsmodi mit beschränkten Leistungsunterschieden vorgenommen wird. Von besonderem Vorteil ist entsprechend eine Zuordnung von Ressourcen mit vergleichbaren Ressourceneigenschaften als Gruppen-Eigenschaft, um die Zuverlässigkeit der Übertragung über mehrere Ressourcen parallel zueinander zu erhöhen.

Hervorzuheben sind drei besondere Neuheiten im Rahmen der bevorzugten Verfahrensweise. Gemäß einem ersten Aspekt findet eine profilbasierte Auswahl einer Ressourcen-Gruppe für ein Multi-Betriebsart-Terminal als Teilnehmerstation aufgrund von CBF-Metriken unter Berücksichtigung der MRTD-Übertragungs-Modi der Ressourcen statt, wobei als Ressourcen-Gruppe insbesondere die Untergliederung in die Kandidaten-Gruppe Set s1 - s4, die aktive primäre Gruppe Set s1, s2 und die aktive sekundäre Gruppe Set s3 berücksichtigt wird. Wenn eine Neukonfiguration der Verbindungen zwischen der aktiven primären Gruppe Set s1, s2 und der aktiven sekundären Gruppe Set s3 stattfindet, wird eine Protokollschicht-übergreifende Signalisierung zwischen verschiedenen Protokollschichten und/oder eine Signalisierung zwischen Knoten jeweils eines der Systeme mit Blick auf einen optimalen Dienst getriggert.

Gemäß einem zweiten hervorzuhebenden Aspekt werden unterschiedliche Aktualisierungsraten für verschiedene Schichten der Ressourcen-Gruppen gewählt, um Batterieleistung und Funksignalisierung zu reduzieren.

Gemäß dem dritten Aspekt wird ein vorzugsweise optimaler Übertragungs-Modus innerhalb der primären aktiven Gruppe Set s1, s2 gewählt.

Beispielhaft wird nachfolgend ein Multi-Funkverbindungs-Zugriffsnetz mit zwei Ressourcen betrachtet. Die erste Ressource wird durch ein Paketdatennetz basierend auf dem GPRS-Standard mit 128 Kbps gebildet, die zweite Ressource durch ein in hohem Maße ausgelastetes lokales Datennetz mit 37 Mbps effektiver Netto-Datenrate und einer freien Kapazität von 220 kbps. Außerdem wird als Teilnehmerstation ein mobiles Terminal angenommen, welches diese beiden Ressourcen unterstützt und eine Diensteklasse von 300 kbps für einen Daten-Download gemäß einem Vertrag mit der Koordinierungseinrichtung hat. In einem solchen Fall wird MRTD über beide Ressourcen gewählt, sodass Datenpakete simultan, alternativ oder redundant über beide Ressourcen übertragen werden, um insgesamt 300 kbps während der Download-Phase der Datei zu erreichen. Vorzugsweise wird als Übertragungsmodus der parallele MRTD-Modus gewählt, welcher aufgrund der verfügbaren Funkressourcen ermöglicht wird.

Gemäß einem anderen Beispiel bietet ein Betreiber eine Mobilfunkinfrastruktur basierend auf dem UMTS-Standard und einer Spitzen-Datenrate von 2 Mbps, einem Hochgeschwindigkeits-Downlink-Paketdaten-Zugriff mit einer Spitzen-Datenrate von 10 Mbps und ein lokales Funk-Datennetz nach dem WiMAX-Standard mit einer Spitzendatenrate von 15 Mbps. Der Betreiber bietet zudem verschiedene Teilnehmerklassen mit unterschiedlichen Gebühren an. Außerdem wird beispielhaft die Existenz einer bestimmten Teilnehmerklasse angenommen, welche eine durchschnittliche Datei-Download-Rate von z.B. 768 kbps bietet. Falls ein nomadischer Teilnehmer, der für diese Klasse eingeschrieben ist, Daten aus dem Internet mittels seiner Multi-Funkverbindungs-Teilnehmerstation an einem Ort herunterladen möchte, an dem alle Ressourcen mit mittleren Signal-zu-Rausch-Werten verfügbar sind, wird der Betreiber erstens den Hochgeschwindigkeits-Downlink-Paket-Zugriff und ein lokales Datennetz aufgrund deren hoher Vergleichbarkeit der Leistungen wählen. Als zweites werden etwa ähnliche Ressourcen, welche im Mittel 384 kbps bieten, von beiden Ressourcen, dem Hochgeschwindigkeits-Downlink-Paket-Zugriff und dem lokalen Funk-Datennetz gewählt, um den Datenstrom herunterzuladen und eine durchschnittliche Datenrate von 768 kbps unter Verwendung parallelen MRTDs zu ermöglichen. Auf diese Art und Weise kann der Betreiber der Teilnehmerstation den maximal möglichen Gewinn von MRTD mit Blick auf Funkverbindungs-Effizienz, Robustheit und Leistungsgewinn bieten.

Hervorzuheben sind die nachfolgenden Vorteile. Ein maximaler Leistungsvorteil von MRTD mit Blick auf die Kombination verschiedener Typen von Ressourcen ist erzielbar. Dies wird ermöglicht, da eine inhärente MRTD-Leistungsverschlechterung an der Funk-Schnittstelle vermieden wird, welche durch die Verwendung von Ressourcen mit verschiedenen Leistungscharakteristika entstehen würde. Darüber hinaus wir die Wahrscheinlichkeit eines Paketverlustes aufgrund eines Pufferspeicherüberlaufs beim Empfänger aufgrund einer Verzögerung vermieden, welche durch langsamere Ressourcen entstehen kann. Reduziert wird auch die Wahrscheinlichkeit, dass Segmente oder Pakete aus der Reihenfolge geraten. MRTD bietet verschiedene Modi: einen geschalteten Modus, einen parallelen Modus und einen parallel-redundanten Modus. Durch die Verwendung von gleichzeitig einer aktiven Ressourcen-Gruppe und einer Übertragungsmodus-Auswahl wird im parallel-redundanten Modus ein zusätzlicher Diversitätsgewinn ermöglicht, ein Multiplexgewinn im Fall einer parallelen Betriebsart für den Verkehr sowie ein Bündelungsgewinn im parallelen Modus und im geschalteten Modus. Der Batterieverbrauch der Teilnehmerstation und eine Signalisierungs-Überbelastung werden signifikant reduziert, da die Kandidaten-Ressourcen-Gruppe, welche sämtliche verfügbaren Ressourcen umfasst, untergliedert wird in mehrere zugreifbare Gruppen mit Ressourcen, welche jeweils zumindest eine gemeinsame Gruppen-Eigenschaft aufweisen. Insbesondere werden vorteilhafter Weise eine primäre aktive Ressourcen-Gruppe und eine sekundäre Ressourcen-Gruppe eingeführt.

## Patentansprüche

1. Verfahren zum Betreiben einer Funk-Kommunikation in einem Multi-Funkverbindungs-Kommunikationssystem (MRTD), bei dem mittels einer Koordinierungseinrichtung (NMO) eine Netzinformation (s) bezüglich verfügbarer Ressourcen (AC1 - AC8), welche zum Übertragen von Daten (d1, d2) verfügbar sind, an Netzeinrichtungen (SGSN, BSC1, BSC2, S2 - S5) und/oder an Teilnehmerstationen (UT) übertragen wird,
**dadurch gekennzeichnet, dass** die Netzinformation (s) die verfügbaren Ressourcen zu Gruppen (s1 - s4) zuordnet, wobei die Ressourcen den verschiedenen Gruppen (s1 - s4) abhängig von jeweils zumindest einer gemeinsamen Gruppen-Eigenschaft (ri, qi) zugeordnet werden.

2. Verfahren nach Anspruch 1, bei dem durch eine netzseitige Einrichtung die Funktionalität der Koordinierungseinrichtung (NMO) bereitgestellt wird, und die Netzinformation (s) an Netzeinrichtungen (SGSN, BSC1, BSC2, S2 - S5) unterschiedlicher Kommunikationssysteme (UMTS, GSM, WLAN) übertragen wird.

3. Verfahren nach Anspruch 1 oder 2, bei dem die Netzinformation (s) an die Teilnehmerstation (UT) übertragen wird, welche parallel über zumindest zwei verschiedene Ressourcen (AC1; AC2, AC3; AC4 - AC8) kommunizieren kann, wobei die Teilnehmerstation (UT) das Übertragen der Daten (d1, d2) über zumindest zwei von der Netzinformation (s) abhängig ausgewählte Ressourcen (AC3, AC6) durchführt.

4. Verfahren nach einem vorstehenden Anspruch, bei dem eine Zusatzinformätion (i7) von der Teilnehmerstation (UT) zum Aktualisieren der Netzinformation (s) an eine netzseitige Einrichtung (BSC1, NMO) übertragen wird,
wobei die Zusatzinformation einen Informationsinhalt aufweist, der gegenüber einer durch die Teilnehmerstation (UT) empfangenen Netzinformation (s) bezüglich einer durch die Teilnehmerstation (UT) 5 erfassten Verfügbarkeit der Ressourcen abweicht.

5. Verfahren nach einem vorstehenden Anspruch, wobei die Gruppen (s1 - s4) von der Koordinierungseinrichtung für die Teilnehmerstation (UT) individuell bereitgestellt werden.

6. Verfahren nach einem vorstehenden Anspruch, wobei gleichartige Datenanteile von Daten eines Dienstes über verschiedene Ressourcen einer Gruppe übertragen werden.

7. Verfahren nach einem vorstehenden Anspruch, wobei verschiedenartige Datenanteile von Daten (d1, d2) eines Dienstes (D) über Ressourcen verschiedener Gruppen übertragen werden.

8. Verfahren nach Anspruch 7, bei dem die verschiedenen Datenanteile als einerseits Basisinformationen (hd) und andererseits Zusatzinformationen (data) des Dienstes (D) übertragen werden.

9. Verfahren nach einem der Ansprüche 6 bis 8, bei dem die Datenanteile aus einerseits Echtzeitdaten (hd) und andererseits Nicht-Echtzeitdaten (data) gebildet werden.

10. Verfahren nach einem der vorstehenden Anspruch,
wobei den verschiedenen Gruppen (s1 - s4) als deren Gruppen-Eigenschaft eine jeweils vergleichbare erzielbare, insbesondere zeitabhängige Datenrate (ri) für das Übertragen der Daten zugeordnet ist.

11. Verfahren nach einem vorstehenden Anspruch, wobei den verschiedenen Gruppen (s1 - s4) als deren Gruppen-Eigenschaft eine Diensteeigenschaft zugeordnet ist.

12. Verfahren nach Anspruch 11, bei dem als Diensteeigenschaft eine lokale oder überregionale Verfügbarkeit definiert ist.

13. Verfahren nach Anspruch 11 oder 12, bei dem als Diensteeigenschaft ein Umfang einer Teilnehmer- oder Teilnehmerstations-Zugriffsberechtigung eines mit der Teilnehmerstation (UT) kommunizierenden Teilnehmers oder der Teilnehmerstation (UT) zugeordnet ist.

14. Verfahren nach einem vorstehenden Anspruch, wobei die Zuordnung der verfügbaren Ressourcen (AC1 - AC8) zu den Gruppen (s1 - s4) bei Änderungen der Verfügbarkeit aktualisiert wird und/oder für verschiedene der Gruppen (s1 - s4) zu verschiedenen zeitlichen Abständen (tp, ts, ta, tc) aktualisiert wird.

15. Verfahren nach einem vorstehenden Anspruch, bei dem die Zuordnung der verfügbaren Ressourcen zu den Gruppen abhängig von einer aktuellen Netzauslastung durchgeführt wird.

16. Koordinierungseinrichtung (NMO) für ein Multi-Funkverbindungs-Kommunikationssystems (MRTD) welche eine Netzinformation (s, i1 - i8) bezüglich verfügbarer Ressourcen (AC1 - AC8) zum Übertragen von Daten (d1,d2) über eine erste Schnittstelle (I*) mit einem Netzknoten (SGSN, BSC1, BSC2, S2-S8) oder über eine zweite Schnittstelle (I) mit einer Teilnehmerstation (UT) austauscht,
und mit einer Steuereinrichtung (C*) zum Bereitstellen der Netzinformation (s) mit Gruppen (s1 - s4) verfügbarer Ressourcen, wobei die Ressourcen innerhalb der verschiedenen Gruppen (s1 - s4) jeweils eine gemeinsame Gruppen-Eigenschaft (ri, qi) aufweisen.

17. Vorrichtung nach Anspruch 16, bei der die Steuereinrichtung (C*) in einer Koordinierungseinrichtung (NMO) angeordnet ist, welche zum Kommunizieren mit Netzeinrichtungen verschiedener Kommunikationssysteme und zum Berücksichtigen der Ressourcen der verschiedenen Kommunikationssysteme ausgelegt ist.

18. Vorrichtung nach Anspruch 16 oder 17, wobei die verschiedenen Ressourcen (AC1; AC2, AC3; AC4 - AC8) Funk-Ressourcen technologisch verschiedenartiger Kommunikationssysteme sind, insbesondere die Funk-Ressourcen Mobilfunk-Kommunikationssystemen (UMTS; GSM) und/oder lokalen Funkdatennetzen (WLAN) zugeordnet sind.

19. Vorrichtung nach Anspruch 16 oder 17, wobei die verschiedenen Ressourcen verschiedene Funk-Ressourcen eines einzelnen Kommunikationssystems sind.

20. Koordinierungseinrichtung (NMO) nach Anspruch 16 oder 17, bei der die Netzinformation (s) oder die Gruppen (s1-s4) einheitlich für alle Teilnehmerstationen (UT) oder speziell für individuelle Teilnehmerstationen (UT) bereitstellbar sind.

21. Teilnehmerstation (UT) für ein Multi-Funkverbindungs-Kommunikationssystem (MRTD)
mit Mitteln zum Empfang einer ersten Netzinformation (s) von einer netzseitigen Koordinierungseinrichtung (NMO) bezüglich verfügbarer Ressourcen (AC1 - AC8) über eine Schnittstelle (I),
wobei mittels der Netzinformation (s) die verfügbaren Ressourcen zu Gruppen (s1 - s4) zuordenbar sind, und
wobei die Ressourcen den verschiedenen Gruppen (s1 - s4) abhängig von jeweils zumindest einer gemeinsamen Gruppen-Eigenschaft (ri, qi) zuordenbar sind,
und mit einer Steuereinrichtung (C) zum Auswählen von zumindest zwei Ressourcen für eine parallele Übertragung von Daten (d1, d2) abhängig von einer durch die Teilnehmerstation (UT) ausgewählten Gruppe der Gruppen (s1 -s4).

22. Teilnehmerstation (UT) nach Anspruch 21
mit Mitteln zum Senden einer Zusatzinformation (i7) zu der netzseitigen Koordinierungseinrichtung (NMO) über eine Schnittstelle (I),
wobei die Zusatzinformation (i7) einen Informationsinhalt aufweist über die Verfügbarkeit vorhandener Ressourcen.

23. Teilnehmerstation (UT) nach Anspruch 22, wobei die Zusatzinformation einen Informationsinhalt aufweist, der gegenüber einer durch die Teilnehmerstation (UT) empfangenen Netzinformation (s) bezüglich einer durch die Teilnehmerstation (UT) erfassten Verfügbarkeit der Ressourcen abweicht.

## Claims

1. Method for operating a radio communication in a multi-radio link communications system (MRTD), wherein a network information item (s) regarding available resources (AC1 - AC8), which are available for transmitting data (d1, d2), is transmitted to network devices (SGSN, BSC1, BSC2, S2 - S5) and/or to subscriber stations (UT) by means of a coordination device (NMO),
**characterized in that**
the network information item (s) assigns the available resources to sets (s1 - s4), wherein the resources are assigned to different sets (s1 - s4) depending on in each case at least one common set property (r1, qi).

2. Method according to Claim 1, wherein
the functionality of the coordination device (NMO) is provided by a network-side device, and the network information item (s) is transmitted to network devices (SGSN, BSC1, BSC2, S2 - S5) of different communications systems (UMTS, GSM, WLAN).

3. Method according to Claim 1 or 2, wherein
the network information item (s) is transmitted to the subscriber station (UT) which can communicate in parallel via at least two different resources (AC1; AC2, AC3; AC4 - AC8), wherein the subscriber station (UT) carries out the transmission of the data (d1, d2) via at least two resources (AC3, AC6) selected depending on the network information item (s).

4. Method according to any preceding claim, wherein
an additional information item (i7) is transmitted to a network-side device (BSC1, NMO) from the subscriber station (UT) for updating the network information item (s), wherein the additional information item has an information content which deviates with respect to a network information item (s) received by the subscriber station (UT) with regard to a resource availability detected by the subscriber station (UT).

5. Method according to any preceding claim, wherein
the sets (s1 - s4) are provided individually by the coordination device for the subscriber station (UT).

6. Method according to any preceding claim, wherein
data portions of data of a service which are identical in kind are transmitted via different resources of a set.

7. Method according to any preceding claim, wherein
data portions of data (d1, d2) of a service (D) which are different in kind are transmitted via resources of different sets.

8. Method according to Claim 7, wherein
the different data portions are transmitted as, on the one hand, basic information items (hd) and, on the other hand, additional information items (data) of the service (D).

9. Method according to any of Claims 6 to 8, wherein
the data portions are formed from real-time data (hd), on the one hand, and non-real-time data (data), on the other hand.

10. Method according to any of the preceding claims, wherein
a respectively comparable obtainable, in particular time-dependent, data rate (ri) for the transmission of the data is assigned to the different sets (s1 - s4) as the set property thereof.

11. Method according to any preceding claim, wherein
a service property is assigned to the different sets (s1 - s4) as the set property thereof.

12. Method according to Claim 11, wherein
a local or supraregional availability is defined as the service property.

13. Method according to Claim 11 or 12, wherein
a scope of a subscriber or subscriber station access authorization of a subscriber communicating with the subscriber station (UT) or of the subscriber station (UT) is assigned as the service property.

14. Method according to any preceding claim, wherein
the assignment of the available resources (AC1 - AC8) to the sets (s1 - s4) is updated in the case of changes in the availability and/or is updated for different sets from among the sets (s1 - s4) at different time intervals (tp, ts, ta, tc).

15. Method according to any preceding claim, wherein
the assignment of the available resources to the sets is carried out depending on a current network usage.

16. Coordination device (NMO) for a multi-radio link communications system (MRTD), which exchanges a network information item (s, i1 - i8) regarding available resources (AC1 - AC8) for the transmission of data (d1, d2) via a first interface (I*) with a network node (SGSN, BSC1, BSC2, S2 - S8) or via a second interface (I) with a subscriber station (UT), and comprising a control device (C*) for providing the network information item (s) with sets (s1 - s4) of available resources, wherein the resources within the different sets (s1 - s4) each have a common set property (ri, qi).

17. Apparatus according to Claim 16, wherein
the control device (C*) is arranged in a coordination device (NMO) designed for communicating with network devices of different communications systems and for taking account of the resources of the different communications systems.

18. Apparatus according to Claim 16 or 17, wherein the different resources (AC1; AC2, AC3; AC4 - AC8) are radio resources of communications systems which are technologically different in kind, in particular the radio resources are assigned to mobile radio communications systems (UMTS; GSM) and/or local radio data networks (WLAN).

19. Apparatus according to Claim 16 or 17, wherein the different resources are different radio resources of an individual communications system.

20. Coordination device (NMO) according to Claim 16 or 17,
wherein the network information item (s) or the sets (s1-s4) can be provided uniformly for all subscriber stations (UT) or specifically for individual subscriber stations (UT).

21. Subscriber station (UT) for a multi-radio link communications system (MRTD)
comprising means for receiving a first network information item (s) from a network-side coordination device (NMO) regarding available resources (AC1-AC8), via an interface (I),
wherein the available resources can be assigned to sets (s1-s4) by means of the network information item (s), and
wherein the resources can be assigned to the different sets (s1-s4) depending on in each case at least one common set property (ri, qi),
and comprising a control device (C) for selecting at least two resources for a parallel transmission of data (d1, d2) depending on a set of the sets (s1-s4) which is selected by the subscriber station (UT).

22. Subscriber station (UT) according to Claim 21,
comprising means for transmitting an additional information item (i7) to the network-side coordination device (NMO) via an interface (I),
wherein the additional information item (i7) has an information content about the availability of resources present.

23. Subscriber station (UT) according to Claim 22, wherein the additional information item has an information content which deviates with respect to a network information item (s) received by the subscriber station (UT) with regard to a resource availability detected by the subscriber station (UT).

## Revendications

1. Procédé pour l'exploitation d'une radiocommunication dans un système de communication à liaisons radio multiples (MRTD), dans lequel une information réseau (s) concernant des ressources disponibles (AC1 - AC8) qui sont disponibles pour la transmission de données (d1, d2) est transmise à des dispositifs de réseau (SGSN, BSC1, BSC2, S2 - S5) et/ou à des stations d'usagers (UT) au moyen d'un dispositif de coordination (NMO), **caractérisé en ce que** l'information réseau (s) affecte les ressources disponibles à des groupes (s1 - s4), les ressources étant affectées aux différents groupes (s1 - s4) en fonction de respectivement au moins une caractéristique de groupe commune (ri, qi).

2. Procédé selon la revendication 1, dans lequel la fonctionnalité du dispositif de coordination (NMO) est fournie par un dispositif côté réseau et l'information réseau (s) est transmise à des dispositifs de réseau (SGSN, BSC1, BSC2, S2 - S5) de systèmes de communication différents (UMTS, GSM, WLAN).

3. Procédé selon la revendication 1 ou 2, dans lequel l'information réseau (s) est transmise à la station d'usager (UT) qui peut communiquer parallèlement par l'intermédiaire d'au moins deux ressources différentes (AC1 ; AC2, AC3 ; AC4 - AC8), la station d'usager (UT) effectuant la transmission des données (d1, d2) via au moins deux ressources (AC3, AC6) sélectionnées en fonction de l'information réseau (s).

4. Procédé selon une revendication précédente, dans lequel une information supplémentaire (i7) est transmise par la station d'usager (UT) à un dispositif côté réseau (BSC1, NMO) pour actualiser l'information réseau (s), l'information supplémentaire présentant un contenu d'information qui diffère, par rapport à une information réseau (s) reçue par la station d'usager (UT), en ce qui concerne une disponibilité des ressources détectée par la station d'usager (UT).

5. Procédé selon une revendication précédente, les groupes (s1 - s4) étant fournis individuellement par le dispositif de coordination pour la station d'usager (UT).

6. Procédé selon une revendication précédente, des parties similaires de données d'un service étant transmises via différentes ressources d'un groupe.

7. Procédé selon une revendication précédente, des parties différentes de données (d1, d2) d'un service (D) étant transmises via des ressources de groupes différents.

8. Procédé selon la revendication 7, dans lequel les différentes parties de données sont transmises, d'une part, en tant qu'informations de base (hd) et, d'autre part, en tant qu'informations supplémentaires (data) du service (D).

9. Procédé selon l'une des revendications 6 à 8, dans lequel les parties de données sont constituées, d'une part, à partir de données en temps réel (hd) et, d'autre part, à partir de données non en temps réel (data).

10. Procédé selon l'une des revendications précédentes, un débit de données (ri) pour la transmission des données, réalisable respectivement comparable, plus particulièrement dépendant du temps, étant associé aux différents groupes (s1 - s4) en tant que leur caractéristique de groupe .

11. Procédé selon une revendication précédente, une caractéristique de service étant associée aux différents groupes (s1 - s4) en tant que leur caractéristique de groupe.

12. Procédé selon la revendication 11, dans lequel une disponibilité locale ou suprarégionale est définie en tant que caractéristique de service.

13. Procédé selon la revendication 11 ou 12, dans lequel une portée d'une autorisation d'accès d'usager ou de station d'usager, d'un usager communiquant avec la station d'usager (UT) ou de la station d'usager (UT), est associée en tant que caractéristique de service.

14. Procédé selon une revendication précédente, l'affectation des ressources disponibles (AC1 - AC8) aux groupes (s1 - s4) étant actualisée en cas de modifications de la disponibilité et/ou actualisée pour différents groupes des groupes (s1 - s4) à différents intervalles de temps (tp, ts, ta, tc).

15. Procédé selon une revendication précédente, l'affectation des ressources disponibles aux groupes étant effectuée en fonction d'un taux d'utilisation actuel du réseau.

16. Dispositif de coordination (NMO) pour un système de communication à plusieurs liaisons radio (MRTD), lequel échange une information réseau (s, i1 - i8) concernant des ressources disponibles (AC1 - AC8) pour la transmission de données (d1, d2) via une première interface (I*) avec un noeud de réseau (SGSN, BSC1, BSC2, S2 - S8) ou via une deuxième interface (I) avec une station d'usager (UT), et comprenant un dispositif de commande (C*) pour fournir l'information réseau (s) avec des groupes (s1 - s4) de ressources disponibles, les ressources dans les différents groupes (s1 - s4) présentant respectivement une caractéristique de groupe commune (ri, qi).

17. Dispositif selon la revendication 16, dans lequel le dispositif de commande (C*) est disposé dans un dispositif de coordination (NMO) qui est conçu pour communiquer avec des dispositifs de réseau de différents systèmes de communication et pour prendre en compte les ressources des différents systèmes de communication.

18. Dispositif selon la revendication 16 ou 17, les différentes ressources (AC1 ; AC2, AC3 ; AC4 - AC8) étant des ressources radio de systèmes de communication technologiquement différents, les ressources radio étant plus particulièrement affectées à des systèmes de communication radio mobiles (UMTS ; GSM) et/ou des réseaux locaux de données radio (WLAN).

19. Dispositif selon la revendication 16 ou 17, les différentes ressources étant différentes ressources radio d'un système de communication individuel.

20. Dispositif de coordination (NMO) selon la revendication 16 ou 17, dans lequel l'information réseau (s) ou les groupes (s1 - s4) peuvent être fournis de manière uniforme pour toutes les stations d'usagers (UT) ou spécialement pour des stations d'usagers individuelles (UT).

21. Station d'usager (UT) pour un système de communication à plusieurs liaisons radio (MRTD), comprenant des moyens pour recevoir une première information réseau (s) d'un dispositif de coordination côté réseau (NMO) concernant des ressources disponibles (AC1 - AC8) via une interface (I), les ressources disponibles pouvant être affectées à des groupes (s1 - s4) au moyen de l'information réseau (s) et les ressources pouvant être affectées aux différents groupes (s1 - s4) en fonction de respectivement au moins une caractéristique de groupe commune (ri, qi), et comprenant un dispositif de commande (C) pour sélectionner au moins deux ressources pour une transmission parallèle de données (d1, d2) en fonction d'un groupe sélectionné par la station d'usager (UT) parmi les groupes (s1 - s4).

22. Station d'usager (UT) selon la revendication 21, comprenant des moyens pour envoyer une information supplémentaire (i7) au dispositif de coordination côté réseau (NMO) via une interface (I), l'information supplémentaire (i7) comportant un contenu d'information sur la disponibilité de ressources présentes.

23. Station d'usager (UT) selon la revendication 22, l'information supplémentaire comportant un contenu d'information qui diffère, par rapport à une information réseau (s) reçue par la station d'usager (UT), en ce qui concerne une disponibilité des ressources détectée par la station d'usager (UT).
